# EUROPÄISCHE PATENTSCHRIFT

(11) **EP 3 507 874 B1**
(45) Veröffentlichungstag und Bekanntmachung des Hinweises auf die Patenterteilung: **07.10.2020**
(21) Anmeldenummer: 17803911.1
(22) Anmeldetag: 22.11.2017
(51) Int. Cl.: H02B 3/00, H02B 13/035, H02B 1/30

(54) **VERFAHREN ZUM BETRIEB EINES ELEKTRISCHEN SCHALTGERÄTES INNERHALB EINER ELEKTRISCHEN SCHALTANLAGE**
METHOD FOR OPERATING AN ELECTRICAL SWITCHING DEVICE WITHIN AN ELECTRICAL SWITCHGEAR SYSTEM
PROCÉDÉ POUR FAIRE FONCTIONNER UN APPAREIL DE COMMUTATION ÉLECTRIQUE À L'INTÉRIEUR D'UNE INSTALLATION DE COMMUTATION ÉLECTRIQUE

(30) Priorität: 28.11.2016 DE 102016122907
(43) Veröffentlichungstag der Anmeldung: 10.07.2019
(73) Patentinhaber: Schneider Electric Industries SAS, 92500 Rueil-Malmaison (FR)
(72) Erfinder: RUDOLPH, Thomas, 61191 Rosbach v.d.H. (DE)
(74) Vertreter: Manitz Finsterwald Patent- und Rechtsanwaltspartnerschaft mbB
(86) Internationale Anmeldenummer: PCT/EP2017/079996
(87) Internationale Veröffentlichungsnummer: WO 2018/095944

(56) Entgegenhaltungen:
- EP-A1- 2 224 295
- EP-A1- 2 505 966
- US-A1- 2013 231 779

## Beschreibung

Die Erfindung betrifft ein ein Verfahren nach dem Oberbegriff des Patentanspruchs 1 zum Betrieb eines elektrischen Schaltgerätes innerhalb einer elektrischen Schaltanlage.

Abhängig vom Einsatzzweck besteht bei elektrischen Schaltanlagen in elektrischen Versorgungsnetzen häufig die Anforderung an eine sichere und geschützte Bedienung von einzelnen Schaltgeräten, um zu verhindern, dass Bediener während Schaltvorgängen potentiellen Gefahrensituationen ausgesetzt sind. Elektrische Schaltgeräte können beispielsweise Leistungsschalter, Trennschalter, Erdungsschalter, Unterbrecher und/oder Messwandler sein.

Beispielsweise besteht in Luft-isolierten Schaltanlagen Gefährdungspotential durch die Möglichkeit einer Lichtbogenbildung und damit verbundenem Verletzungsrisiko des Bedieners. Manuelle Fehlbedienungen lassen sich durch Sicherheitsmechanismen einschränken, während Lichtbögen im Rahmen von Lichtbogenschutzmaßnahmen detektiert und verringert werden können. Ein Restrisiko bleibt jedoch bestehen.

Um eine sichere und geschützte Umgebung für eine Bedienung von Schaltgeräten zu bieten, sind separat angeordnete Schaltwarten/-räume bekannt. Diese Schaltwarten/-räume befinden sich vorzugsweise im Umfeld der Schaltanlage, idealerweise so, dass Sichtkontakt zum jeweiligen Schaltgerät besteht. Diese Lösungen sind jedoch für Schaltanlagen im Mittel- und Niederspannungsbereich zu aufwändig und teuer. Auch die stationäre Anordnung anlagespezifischer Bedienpanele an einem sicheren Ort ist hinsichtlich der Kosten und der Installation aufwändig.

Darüber hinaus ist es bekannt, mobile, drahtlos kommunizierende elektrische Geräte, wie z.B. Tablets oder Smart Phones, als örtlich unabhängige Bediengeräte für elektrische Schaltgeräte einzusetzen. Mittels derartiger mobiler elektrischer Geräte kann seitens des Bedieners ein aktiver und/oder passiver Datenaustausch mit dem Schaltgerät generiert werden. Wichtig ist neben der Bedienersicherheit auch die Anforderung an eine sichere Datenübertragung beim Einsatz derartiger mobiler Geräte für elektrische Schaltanlagen. Die US 8,910,249 B2 beschreibt einen Weg zum sicheren Datenaustausch zwischen einem mobilen Gerät und einer elektronischen Steuerung einer Schaltanlage. Die US 20020091784 A1 beschreibt das grundsätzliche Prinzip zur Fernverbindung von intelligenten elektronischen Geräten unter Nutzung eines Web Interfaces.

Weiterhin ist die Ansteuerung eines Kurzschlußtrenners für eine elektrische Laststeckdose mittels eines mobilen elektrischen Gerätes bekannt. Um die betreffende Steckdose zuverlässig zu identifizieren und die Schaltaktion zu ermöglichen, wird auf dem mobilen elektrischen Gerät ein Anwendungsprogramm (App) genutzt. Insbesondere muss dabei ein zugeordneter QR-Code der Steckdose in die App eingelesen werden.

US 2013/0231779 A1 offenbart einen Roboter, welcher Schalter identifizieren und bedienen kann, wobei sich der Bediener an einem geschützten Bedienerort befinden kann. Eine diesbezügliche Freigabe erfolgt jedoch nicht.

EP 2 224 295 A1 offenbart den Oberbegriff des Anspruchs 1.

Die Aufgabe der vorliegenden Erfindung besteht darin, ein Verfahren zur Bedienung eines elektrischen Schaltgerätes innerhalb einer elektrischen Schaltanlage der eingangs genannten Art zu schaffen, bei dem die vorstehend genannten Nachteile beseitigt werden können und eine sichere und geschützte Bedienung des Schaltgerätes außerhalb eines potentiellen Gefahrenfeldes ermöglicht werden kann.

Gelöst wird diese Aufgabe durch die im Patentanspruch 1 angegebenen Merkmale. Vorteilhafte Ausgestaltungen ergeben sich aus den Unteransprüchen.

Die Erfindung gemäß Patentanspruch 1 betrifft ein Verfahren zum Betrieb eines elektrischen Schaltgerätes innerhalb einer elektrischen Schaltanlage.

Um ein elektrisches Schaltgerät außerhalb eines anlagenspezifischen Gefahrenbereiches zuverlässig und sicher bedienen zu können, wird die Nutzung eines mobilen elektrischen Gerätes vorgeschlagen, mittels dessen mit einer elektrischen Steuereinrichtung des elektrischen Schaltgerätes kommuniziert werden kann. Erfindungsgemäß ist durch eindeutig definierte Sicherheitsabfragen eine Bedienung innerhalb des Gefahrenbereiches nicht möglich.

Die Distanz zwischen dem elektrischen Schaltgerät und einem Bediener kann hinreichend groß gestaltet werden, so dass während einer seitens des Bedieners ausgelösten Schaltaktion ein Aufenthalt des Bedieners innerhalb des anlagenspezifischen Gefahrenbereiches sicher vermieden werden kann. Durch die Verwendung eines mobilen elektrischen Gerätes besteht die Möglichkeit, dass der Bediener in der Nähe des Schaltgerätes operiert, aber unter Sicherheitsaspekten hinreichend weit vom Schaltgerät entfernt ist. Unter Berücksichtigung dieser sicherheitsrelevanten Kriterien wird ein Bedienungsort für die Schaltoperation eines elektrischen Schaltgerätes bestimmt und entsprechend gekennzeichnet.

Das erfindungsgemäße Verfahren kann zumindest zwei Sicherheitsabfragen aufweisen. In einem ersten Schritt kann das zu bedienende Schaltgerät innerhalb einer Schaltanlage ausgewählt und identifiziert werden. Zur Auslösung einer Schaltaktion muss nachfolgend in einem zweiten Schritt der korrekte und geschützte Bedienungsort zur Steuerung des ausgewählten Schaltgerätes identifiziert und bestätigt werden. Ausschließlich von diesem Ort ist das Auslösen einer Schaltaktion möglich. Durch diese Methode ergibt sich ein hohes Sicherheitspotential, da die Ausführung von definierten Schaltaktionen des betreffenden Schaltgerätes in einem ungeschützten Bereich nicht möglich ist. Mit der Erfindung wird die drahtlose Bedienungsoption von Schaltgeräten um einen zusätzlichen Schritt erweitert, der Schutz und Sicherheit durch eine zwangsgeführte Identifikation des Schaltgerätes und des Bedienungsortes gewährleistet.

Die Identifikation des Schaltgerätes und des Bedienungsortes können vorzugsweise optisch durch gerätespezifische Identifikationsmittel erfolgen. Eine einfache und kostengünstige Technologie für die Identifikation bei beiden Schritten ist die Nutzung sogenannter QR-Codes, deren grafische Muster gerätespezifische Informationen repräsentieren. Die Verwendung anderer Identifikationsmittel ist ebenfalls möglich. Die Nutzung derartig singulärer Identifikationsmittel erhöht die Zuverlässigkeit und Sicherheit des Verfahrens.

Die mobilen elektrischen Geräte zur Ausführung des erfindungsgemäßen Verfahrens sind nicht stationär verbaut und an können unterschiedlichen Orten betrieben werden können, beispielsweise ein Tablet oder ein Smart Phone. Zum Datenaustausch zwischen dem mobilen elektrischen Gerät und dem elektrischen Schaltgerät bzw. der Steuereinrichtung werden drahtlose Steuerungskomponenten und Software-Lösungen genutzt. Drahtlose Übermittlungstechniken können z.B. WLAN, Bluetooth oder NFC sein.

Gemäß einer besonderen Ausführungsform kann die räumliche Zuordnung des Bedieners zum elektrischen Schaltgerät und zum Bedienungsort auch durch Positionsbestimmungsverfahren ergänzt oder ersetzt werden, beispielsweise unter Nutzung (satellitengestützt) von GPS-Daten, Mobilfunkmasten oder WLAN-Routern. Hierzu ist allerdings eine hinreichend genaue Präzision notwendig, um insbesondere den notwendigen Sicherheitsabstand des Bedienungsortes zum Schaltgerät gewährleisten zu können.

Durch die Verwendung von Identifikationsmitteln an den Schaltgeräten und dem Bedienungsort kann neben der Sicherheit des Bedieners auch eine geschützte Datenkommunikation realisiert werden, da die Daten-übermittlung vom und zum mobilen elektrischen Gerät nur bei korrekter Validierung des Informationsgehaltes des Identifikationsmittels möglich ist. Zusätzlich kann die Datenkommunikation durch Verschlüsselungstechniken vor unberechtigtem Zugriff geschützt werden. Weitere Sicherheitsmaßnahmen können durch unterschiedliche Zugriffsberechtigungen für unterschiedliche Bediener geschaffen werden.

An jedem elektrischen Schaltgerät innerhalb einer elektrischen Schaltanlage, das gemäß dem erfindungsgemäßen Verfahren bedient werden kann, ist ein erstes Identifikationsmittel an der entsprechenden Gehäuseeinheit installiert. Dieses erste Identifikationsmittel kann genutzt werden, um das zu bedienende Schaltgerät innerhalb der Schaltanlage zu identifizieren, wobei mit einer entsprechenden Anwendungssoftware auf dem mobilen elektrischen Gerät die konkrete Identifikation vorgenommen werden kann. Die Geräteauswahl kann auch durch einen elektronisch erteilten Arbeitsauftrag erfolgen, beispielsweise durch eine Leitstelle. Das Identifikationsmittel kann in diesem Fall optional zur Validierung des Arbeitsauftrages genutzt werden. Durch das Einlesen des ersten Identifikationsmittels in das Programm des mobilen elektronischen Gerätes kann die Datenkommunikation freigegeben und der Informationsaustausch mit der elektronischen Steuereinheit des Schaltgerätes gestartet werden. Dabei kann eine Validierung hinsichtlich der korrekten Auswahl des Schaltgerätes basierend auf dem Identifikationsmittel des Schaltgerätes und der entsprechenden Meldung seitens der Anwendungssoftware auf dem mobilen elektrischen Gerät erfolgen. Weiterhin kann eine Bestätigung der erfolgten Geräteverbindung unter Übermittlung der Referenzdaten des elektrischen Schaltgerätes, des Anlagenstatus und weiterer relevanter Details an das mobile elektrische Gerät gesandt werden. Der Bediener seinerseits kann die übersandten Informationen bestätigen. Optional kann dabei oder zu einem anderen Zeitpunkt während der Ausführung des erfindungsgemäßen Verfahrens eine Blockade von Kommandos und/oder Schaltaktionen durch andere Bediener an die Steuereinrichtung des elektrischen Schaltgerätes gesendet werden.

Nach der vorbeschriebenen Kommunikation beim Einlesen des ersten Identifikationsmittels des betreffenden Schaltgerätes ist das mobile elektrische Gerät in der Lage die Steuerung des Schaltgerätes zu übernehmen. Die Ausführung von Kommandos und/oder Schaltaktionen kann ausschließlich erfolgen, sofern der Bediener sich über das mobile elektrische Gerät an dem geschützten Bedienerort durch Einlesen des dort angeordneten und zugehörigen zweiten Identifikationsmittels identifiziert hat. Durch Einlesen dieses zweiten Identifikationsmittels kann die Schaltfreigabe seitens der elektrischen Steuereinrichtung erteilt werden, so dass das Schaltgerät von dem geschützten Platz bedient werden kann.

Nach dieser Freigabe kann eine Bestätigungsabfrage betreffend die korrekte Zugehörigkeit beider Identifikationsmittel und eine Abfrage bezüglich des Status des Schaltgerätes erfolgen. Die Freigabebestätigung durch das zweite Identifikationsmittel gewährleistet, dass der Bediener sich bei der Ausführung der Schaltaktion weiterhin am geschützten Bedienerort aufhält. Die erneute Statusabfrage des Schaltgerätes nach Einlesen des zweiten Identifikationsmittels ermöglicht eine Meldung über eine Statusveränderung innerhalb der Zeitspanne zwischen den beiden Identifikationsschritten.

Die erfindungsgemäße Lösung eignet sich für elektrische Schaltgeräte in elektrischen Schaltanlagen sowohl im Bereich der Niederspannung, der Mittelspannung als auch der Hochspannung. Abhängig vom Anwendungsfall kann die Lösung für Luft-isolierte Schaltanlagen und auch bei Gas-isolierten Schaltanlagen realisiert werden, ungeachtet der grundsätzlichen Situation, dass die Problematik von Lichtbogenbildung bei Gas-isolierten Schaltanlagen nicht entsteht, da eine vollständige Isolation vorhanden ist. Eine weitere Einsatzmöglichkeit bietet sich bei elektrischen Maschinen oder elektrischen Schaltanlagen, deren Betrieb Gefährdungspotential aufweist oder die an einem gefährdeten Einsatzort operieren. Sofern in bestehenden Schaltanlagen keine oder ungeeignete elektrisch steuerbaren Schaltgeräte vorhanden sind, können entsprechende drahtlos kommunizierende elektrische Steuereinrichtungen nachgerüstet werden.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:

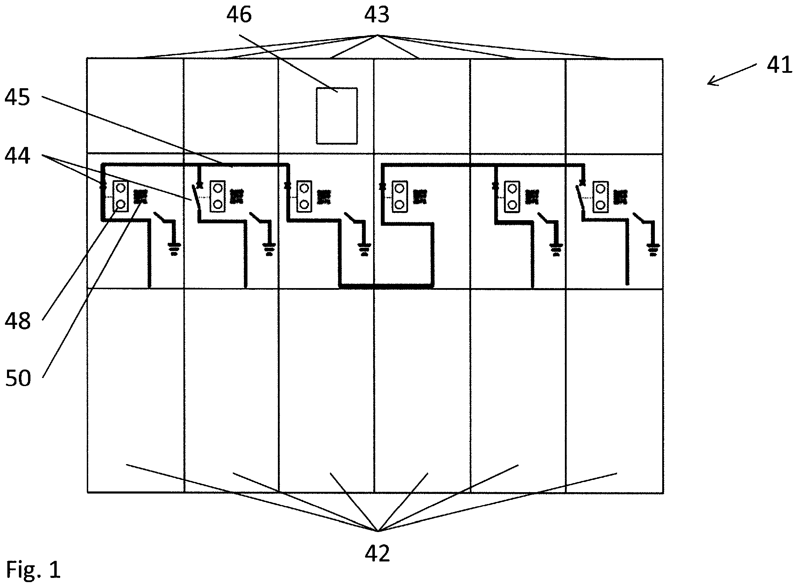

- Figur 1: schematisch eine elektrische Schaltanlage,

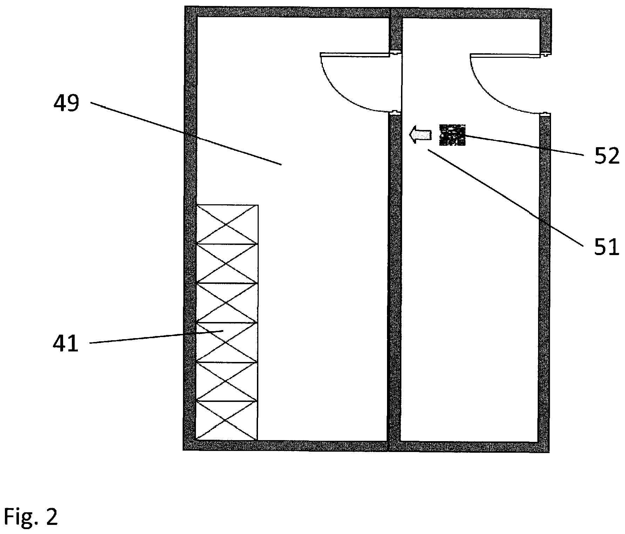

- Figur 2: schematisch eine räumliche Anordnung der elektrischen Schaltanlage und eines geschützten Bedienerortes und
- Figur 3: schematisch ein Ablaufdiagramm des erfindungsgemäßen Verfahrens.

Gleiche oder gleichwirkende Bauteile sind in der nachfolgenden Beschreibung mit gleichen Bezugszeichen versehen.

Anhand der Figuren wird nachfolgend das grundsätzliche Prinzip eines Verfahrens zur Bedienung eines elektrischen Schaltgerätes innerhalb einer elektrischen Schaltanlage erklärt.

Beispielhaft wird dabei von einer elektrischen Schaltanlage 41 im Mittelspannungsbereich ausgegangen, die zur Weiterleitung und/oder Verteilung der zugeführten Mittelspannung an nachgeschaltete Netzwerke und/oder Verbraucher dient. Eine derartige elektrische Schaltanlage 41 besteht aus einer Mehrzahl von Schaltfeldern 42, die in schrankartigen Gehäusen oder Gehäusemodulen 43 angeordnet sind. Zur Steuerung und Regelung der Schaltanlage 41 sind unterschiedliche Komponenten in den Schaltfeldern 42 angeordnet, insbesondere sind elektrische Schaltgeräte 44 untergebracht. Es handelt sich dabei beispielsweise um Leistungsschalter, Trennschalter, Erdungsschalter, Unterbrecher und/oder Messwandler. Die Schaltanlage 41, die Schaltfelder 42 und die elektrischen Schaltgeräte 44 sind über nur schematisch dargestellte Sammelschienen und Leitungen 45 untereinander und mit dem Mittelspannungsnetz elektrisch verbunden.

Die elektrischen Schaltgeräte 44 sind mit einer zentral angeordneten elektrischen Steuereinrichtung 46 verbunden, um Daten austauschen zu können und Schaltaktionen auslösen zu können. Die Steuereinrichtung 46 kann weiterhin Statusanzeigen (nicht dargestellt) im Gehäuse 43 ansteuern und andererseits drahtlos mit mobilen elektrischen Geräten 47, wie z. B. Tablets oder Smart Phones, kommunizieren. Zur datentechnischen Verbindung der mobilen elektrischen Geräte 47 mit elektrischen Schaltgeräten 44 existieren drahtlose Steuerungskomponenten und Software-Lösungen sowie entsprechende Anwendungsprogramme, die sowohl auf den mobilen elektrischen Geräten 47 als auch in den elektrischen Steuereinrichtungen 46 installiert sind. Der drahtlose Informationsaustausch kann z.B. mittels WLAN, Bluetooth oder NFC erfolgen. Optional können die Schaltgeräte 44 auch manuell über in den Schaltfeldern 42 angeordnete Bedienelemente 48 betätigt werden.

Die elektrische Schaltanlage 41 ist einschließlich der elektrischen Schaltgeräte 44 in einem entsprechenden Schaltraum 49 aufgestellt. Am Gehäuse 43 mehrerer und insbesondere aller elektrischen Schaltgeräte 44 ist außenseitig ein Identifikationsmittel 50 in Form eines ersten QR-Codes installiert. Zusätzlich können die Schaltgeräte 44 ein Typenschild (nicht dargestellt) mit geräte- und/oder anlagenspezifischen Daten aufweisen. Desweiteren ist in dem Schaltraum 49 an einem Bedienerort 51, der sich außerhalb des Gefahrenbereiches des jeweiligen Schaltgerätes 44 befindet, ein weiteres Identifikationsmittel 52 in Form eines zweiten QR-Codes installiert.

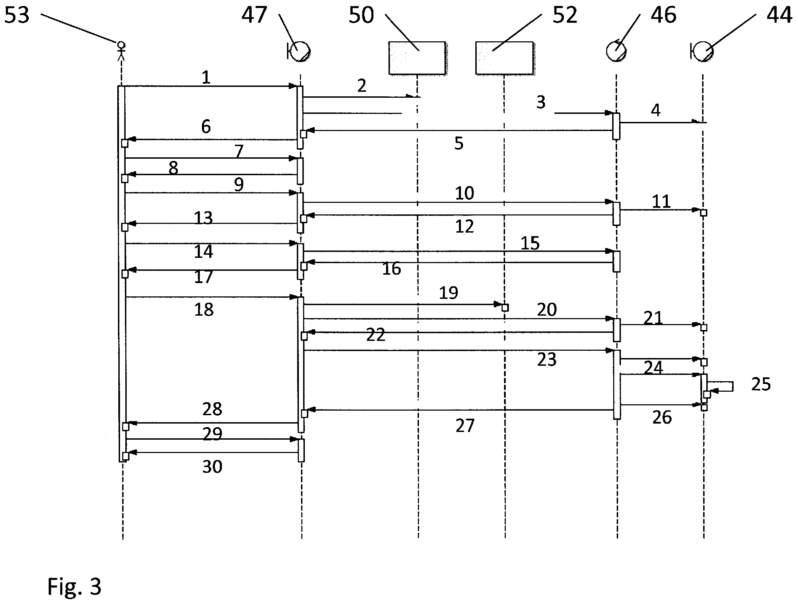

Nachfolgend wird unter Bezugnahme auf die Figur 3 anhand der nachfolgend durchnummerierten Schritte ein möglicher Ablauf des Verfahrens besch rieben.
1 - Ein Bediener 53 wählt das zu bedienende elektrische Schaltgerät 44 der elektrischen Schaltanlage 41 auf seinem mobilen elektrischen Gerät 47 aus.
2 - Einlesen des ersten Identifikationsmittels 50 des ausgewählten elektrischen Schaltgerätes 44
3 - (Optionales Einlesen der Geräte-/Anlageninformationen vom Typenschild)
4 - Steuereinrichtung 46 des elektrischen Schaltgerätes 44 liest den Gerätestatus
5 - Rückmeldung seitens der Steuereinrichtung 46 an das mobile elektrische Gerät 47 mit Typenschildinformationen und Gerätestatus
6 - Anzeige von Typenschildinformationen und Gerätestatus auf dem Display des mobilen elektrischen Gerätes 47
7 - Bestätigung des Bedieners 53 auf dem mobilen elektrischen Gerät 47 über die korrekte Auswahl des elektrischen Schaltgerätes 44
8 - Das mobile elektrische Gerät 47 erstellt mittels seines Anwendungsprogrammes (App) ein Menue (Übersicht) mit möglichen Kommandos und/oder Schaltaktionen
9 - Bediener 53 wählt das auszuführende Kommando
10 - Das mobile elektrische Gerät 47 fordert erneut Gerätestatus von der Steuereinrichtung 46 des elektrischen Schaltgerätes 44
11 - Die Steuereinrichtung 46 liest den Gerätestatus des elektrischen Schaltgerätes 44
12 - Die Steuereinrichtung 46 sendet den Gerätestatus zurück an das mobile elektrische Gerät 47
13 - Das mobile elektrische Gerät 47 zeigt Menü mit Gerätestatus
14 - Der Bediener 53 bestätigt ausgewähltes Kommando
15 - Das mobile elektrische Gerät 47 sendet Blockade anderer Kommandos und/oder Schaltaktionen an die Steuereinrichtung 46
16 - Die Steuereinrichtung 46 bestätigt Blockade an das mobile elektrische Gerät 47
17 - Das mobile elektrische Gerät 47 fordert Bediener 53 zur Positionsveränderung an den sicheren Bedienerort 51 auf
18 - Bestätigung des Bedienerortes 51 und Auslösen der Schaltaktion durch:
19 - Einlesen des zweiten Identifikationsmittels 52 am Bedienerort 51
20 - Automatische Validierung des sicheren Bedienerortes 51 von dem mobilen elektrischen Gerät 47 an die Steuereinrichtung 46
21 - Die Steuereinrichtung 46 liest Gerätestatus des elektrischen Schaltgerätes 44
22 - Bestätigung von Steuereinrichtung 46 an das mobile elektrische Gerät 47 über sicheren Bedienerort 51 und Gerätestatus
23 - Das mobile elektrische Gerät 47 sendet Kommando zur Ausführung der Schaltaktion an Steuereinrichtung 46
24 - Steuereinrichtung 46 liest Gerätestatus des elektrischen Schaltgerätes 44 und sendet Kommando an elektrisches Schaltgerät 44
25 - Ausführung der Schaltaktion durch das elektrische Schaltgerät 44
26 - Nach Schaltaktion liest die Steuereinrichtung 46 wieder den Gerätestatus
27 - Die Steuereinrichtung 46 sendet neuen Gerätestatus an das mobile elektrische Gerät 47
28 - Anzeige des neuen Gerätestatus auf Display des mobilen elektrischen Gerätes 47
29 - Bediener schließt Kontrollmenü des mobilen elektrischen Gerätes 47
30 - Automatische Anzeige von möglichen Aktionen seitens des mobilen elektrischen Gerätes 47

Anschließend können mit dem mobilen elektrischen Gerät 47 weitere Schaltaktionen an dem gleichen elektrischen Schaltgerät 44 oder an anderen elektrischen Schaltgeräten 44 durchgeführt werden.

Die vorstehende Beschreibung des Ausführungsbeispieles dient nur zu illustrativen Zwecken und nicht zum Zwecke der Beschränkung der Erfindung. Im Rahmen der Erfindung sind, wie in den anhängigen Ansprüchen definiert, verschiedene Änderungen und Modifikationen möglich, ohne den Umfang der Erfindung sowie ihrer Äquivalente zu verlassen.

## Patentansprüche

1. Verfahren zur Bedienung eines elektrischen Schaltgerätes (44) innerhalb einer elektrischen Schaltanlage (41) durch einen Bediener (53) mittels eines mobilen elektrischen Gerätes (47), das drahtlos mit dem elektrischen Schaltgerät (44) kommuniziert, und
der Bediener (53) in einem ersten Schritt mittels des mobilen elektrischen Gerätes (44) ein erstes Identifikationsmittel (50) einliest, um das zu bedienende elektrische Schaltgerät (44) eindeutig zu identifizieren, **dadurch gekennzeichnet, dass**
der Bediener (53) in einem zweiten Schritt mittels des mobilen elektrischen Gerätes (47) ein zweites Identifikationsmittel (53) einliest, um einen geschützten Bedienerort (51) eindeutig zu identifizieren, und
in einem dritten Schritt der Bediener (53) berechtigt ist, das identifizierte elektrische Schaltgerät (44) mittels des mobilen elektrischen Gerätes (47) zu bedienen, wenn er sich an dem identifizierten Bedienerort (51) befindet.

2. Verfahren zur Bedienung eines elektrischen Schaltgerätes (44) nach Patentanspruch 1,
**dadurch gekennzeichnet, dass**
die Ausführung von Kommandos und/oder Schaltaktionen ausschließlich erfolgen kann, sofern der Bediener (53) sich an dem geschützten Bedienerort (51) durch Einlesen des dort angeordneten und zugehörigen zweiten Identifikationsmittels (52) in das mobile elektrische Gerät (47) identifiziert hat.

3. Verfahren zur Bedienung eines elektrischen Schaltgerätes (44) nach zumindest einem der vorhergehenden Patentansprüche,
**dadurch gekennzeichnet, dass**
nach erfolgter datentechnischer Verbindung zwischen dem mobilen elektrischen Gerät (47) und dem elektrischen Schaltgerät (44) eine Rückmeldung an das mobile elektrische Gerät (47) gesandt wird, die zumindest die Referenzen und/oder den Status des elektrischen Schaltgerätes (44) beinhaltet.

4. Verfahren zur Bedienung eines elektrischen Schaltgerätes (44) nach zumindest einem der vorhergehenden Patentansprüche,
**dadurch gekennzeichnet, dass**
bei der Ausführung von Kommandos und/oder Schaltaktionen Kommandos und/oder Schaltaktionen weiterer Bediener blockiert sind.

5. Verfahren zur Bedienung eines elektrischen Schaltgerätes (44) nach zumindest einem der vorhergehenden Patentansprüche,
**dadurch gekennzeichnet, dass**
eine erneute Statusabfrage des elektrischen Schaltgerätes (44) nach Einlesen des zweiten Identifikationsmittels (52) eine Meldung über eine Statusveränderung innerhalb der Zeitspanne zwischen den beiden Identifikationsschritten ermöglicht.

6. Verfahren zur Bedienung eines elektrischen Schaltgerätes (44) nach zumindest einem der vorhergehenden Patentansprüche,
**dadurch gekennzeichnet, dass**
zur datentechnischen Verbindung des mobilen elektrisches Gerätes (47) und dem elektrischen Schaltgerät (44) drahtlose Übermittlungstechniken und/oder drahtlose Steuerungskomponenten und/oder Anwendungsprogramme eingesetzt werden.

7. Verfahren zur Bedienung eines elektrischen Schaltgerätes (44) nach zumindest einem der vorhergehenden Patentansprüche,
**dadurch gekennzeichnet, dass**
die Identifikation des elektrischen Schaltgerätes (44) und des Bedienungsortes (51) durch Identifikationsmittel (50, 52) erfolgt, die geräte- und/oder anlagespezifische Daten enthalten.

8. Verfahren zur Bedienung eines elektrischen Schaltgerätes (44) nach zumindest einem der vorhergehenden Patentansprüche,
**dadurch gekennzeichnet, dass**
die Identifikationsmittel (50, 52) als QR-Code ausgebildet sind.

9. Verfahren zur Bedienung eines elektrischen Schaltgerätes (44) nach zumindest einem der vorhergehenden Patentansprüche,
**dadurch gekennzeichnet, dass**
die räumliche Zuordnung des Bedieners (53) zum elektrischen Schaltgerät (44) und zum Bedienungsort (51) durch Positionsbestimmungsverfahren erfolgt.

10. Verfahren zur Bedienung eines elektrischen Schaltgerätes (44) nach zumindest einem der vorhergehenden Patentansprüche,
**dadurch gekennzeichnet, dass**
das mobile elektrische Gerät (44) unterschiedliche Zugriffsberechtigungen für unterschiedliche Bediener (53) aufweist.

## Claims

1. A method of operating an electrical switching device (44) within an electrical switchgear system (41) by an operator (53) by means of a mobile electrical device (47) which communicates wirelessly with the electrical switching device (44) and,
in a first step, the operator (53) reads a first identification means (50) by means of the mobile electrical device (47) to unambiguously identify the electrical switching device (44) to be operated, **characterized in that**,
in a second step, the operator (53) reads a second identification means (53) by means of the mobile electrical device (47) to unambiguously identify a protected operator location (51) and,
in a third step, the operator (53) is authorized to operate the identified electrical switching device (44) by means of the mobile electrical device (47) when he is located at the identified operator location (51).

2. A method of operating an electrical switching device (44) in accordance with claim 1,
**characterized in that**
the execution of commands and/or switching actions can only take place if the operator (53) has identified himself at the protected operator location (51) by reading the second identification means (52) arranged and associated there into the mobile electrical device (47).

3. A method of operating an electrical switching device (44) in accordance with at least one of the preceding claims,
**characterized in that**
feedback is sent to the mobile electrical device (47) after a data processing connection has been established between the mobile electrical device (47) and the electrical switching device (44), said feedback at least including the references and/or the status of the electrical switching device (44).

4. A method of operating an electrical switching device (44) in accordance with at least one of the preceding claims,
**characterized in that**,
on the execution of commands and/or switching actions, commands and/or switching actions of further operators are blocked.

5. A method of operating an electrical switching device (44) in accordance with at least one of the preceding claims,
**characterized in that**
a repeated status query of the electrical switching device (44) after reading the second identification means (52) enables a report on a status change within the time period between the two identification steps.

6. A method of operating an electrical switching device (44) in accordance with at least one of the preceding claims,
**characterized in that**
wireless transmission techniques and/or wireless control components and/or application programs are used for the data processing connection of the mobile electrical device (47) and the electrical switching device (44).

7. A method of operating an electrical switching device (44) in accordance with at least one of the preceding claims,
**characterized in that**
the identification of the electrical switching device (44) and of the operating location (51) takes place by identification means (50, 52) which include device-specific and/or system-specific data.

8. A method of operating an electrical switching device (44) in accordance with at least one of the preceding claims,
**characterized in that**
the identification means (50, 52) are formed as QR codes.

9. A method of operating an electrical switching device (44) in accordance with at least one of the preceding claims,
**characterized in that**
the spatial association of the operator (53) with the electrical switching device (44) and with the operator location (51) takes place by position determination methods.

10. A method of operating an electrical switching device (44) in accordance with at least one of the preceding claims,
**characterized in that**
the mobile electrical device (44) has different access authorizations for different operators (53).

## Revendications

1. Procédé pour faire fonctionner un appareil de commutation électrique (44) à l'intérieur d'une installation de commutation électrique (41) par un opérateur (53) au moyen d'un appareil électrique mobile (47) qui communique sans fil avec ledit appareil de commutation électrique (44),
dans lequel
dans une première étape, l'opérateur (53) lit un premier moyen d'identification (50) à l'aide de l'appareil électrique mobile (44) afin d'identifier de manière univoque l'appareil de commutation électrique (44) à faire fonctionner,
**caractérisé en ce que**
dans une deuxième étape, l'opérateur (53) lit un deuxième moyen d'identification (53) à l'aide de l'appareil électrique mobile (47) afin d'identifier de manière univoque un lieu d'exploitation protégé (51), et dans une troisième étape, l'opérateur (53) est autorisé à faire fonctionner l'appareil de commutation électrique identifié (44) à l'aide de l'appareil électrique mobile (47) lorsqu'il se trouve au lieu d'exploitation identifié (51).

2. Procédé pour faire fonctionner un appareil de commutation électrique (44) selon la revendication 1,
**caractérisé en ce que**
l'exécution de commandes et/ou d'actions de commutation peut avoir lieu exclusivement à condition que l'opérateur (53) se soit identifié au lieu d'exploitation protégé (51) par lecture du deuxième moyen d'identification (52) associé et y disposé dans l'appareil électrique mobile (47).

3. Procédé pour faire fonctionner un appareil de commutation électrique (44) selon l'une au moins des revendications précédentes,
**caractérisé en ce que**
après qu'une connexion informatique a été établie entre l'appareil électrique mobile (47) et l'appareil de commutation électrique (44), un message de retour est envoyé à l'appareil électrique mobile (47), lequel contient au moins les références et/ou l'état de l'appareil de commutation électrique (44).

4. Procédé pour faire fonctionner un appareil de commutation électrique (44) selon l'une au moins des revendications précédentes,
**caractérisé en ce que**
lors de l'exécution de commandes et/ou d'actions de commutation, les commandes et/ou les actions de commutation d'autres opérateurs sont bloquées.

5. Procédé pour faire fonctionner un appareil de commutation électrique (44) selon l'une au moins des revendications précédentes,
**caractérisé en ce que**
une nouvelle interrogation sur l'état de l'appareil de commutation électrique (44) après lecture du deuxième moyen d'identification (52) permet d'obtenir un message sur un changement d'état dans l'intervalle de temps entre les deux étapes d'identification.

6. Procédé pour faire fonctionner un appareil de commutation électrique (44) selon l'une au moins des revendications précédentes,
**caractérisé en ce que**
des techniques de transmission sans fil et/ou des composants de commande sans fil et/ou des programmes d'application sont utilisés pour la connexion informatique de l'appareil électrique mobile (47) et de l'appareil de commutation électrique (44).

7. Procédé pour faire fonctionner un appareil de commutation électrique (44) selon l'une au moins des revendications précédentes,
**caractérisé en ce que**
l'identification de l'appareil de commutation électrique (44) et du lieu d'exploitation (51) s'effectue par des moyens d'identification (50, 52) contenant des données spécifiques à l'appareil et/ou à l'installation.

8. Procédé pour faire fonctionner un appareil de commutation électrique (44) selon l'une au moins des revendications précédentes,
**caractérisé en ce que**
les moyens d'identification (50, 52) sont réalisés sous la forme d'un code QR.

9. Procédé pour faire fonctionner un appareil de commutation électrique (44) selon l'une au moins des revendications précédentes,
**caractérisé en ce que**
l'association spatiale de l'opérateur (53) à l'appareil de commutation électrique (44) et au lieu d'exploitation (51) est effectuée par des méthodes de détermination de la position.

10. Procédé pour faire fonctionner un appareil de commutation électrique (44) selon l'une au moins des revendications précédentes,
**caractérisé en ce que**
l'appareil électrique mobile (44) présente des autorisations d'accès différentes pour les différents opérateurs (53).
